# EUROPÄISCHE PATENTSCHRIFT

(11) **EP 2 478 400 B1**
(45) Veröffentlichungstag und Bekanntmachung des Hinweises auf die Patenterteilung: **23.05.2018**
(21) Anmeldenummer: 10810745.9
(22) Anmeldetag: 15.09.2010
(51) Int. Cl.: G02B 6/293, G02B 6/14, H01S 3/067, H01S 3/08

(54) **TRANSVERSALMODENFILTER FÜR WELLENLEITER**
TRANSVERSE MODE FILTER FOR WAVEGUIDES
FILTRES DE MODES TRANSVERSAUX POUR GUIDE D'ONDE

(30) Priorität: 18.09.2009 DE 102009041891
(43) Veröffentlichungstag der Anmeldung: 25.07.2012
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: THOMAS, Jens, Ulrich, 55128 Mainz (DE); VOIGTLÄNDER, Christian, 07745 Jena (DE); NOLTE, Stefan, 07751 Jena (DE); JÁUREGUI MISAS, César, 07743 Jena (DE); STUTZKI, Fabian, 07747 Jena (DE); LIMPERT, Jens, 07751 Jena (DE); TÜNNERMANN, Andreas, 99425 Weimar (DE)
(74) Vertreter: Isfort, Olaf
(86) Internationale Anmeldenummer: PCT/EP2010/005646
(87) Internationale Veröffentlichungsnummer: WO 2011/032684

(56) Entgegenhaltungen:
- US-A- 5 048 913
- TORU MIZUNAMI ET AL: "Bragg Gratings in Multimode and Few-Mode Optical Fibers", JOURNAL OF LIGHTWAVE TECHNOLOGY, Bd. 18, Nr. 2, Februar 2000 (2000-02), XP011029658, ISSN: 0733-8724
- DIETMAR JOHLEN ET AL: "Fiber Fabry-Perot Interferometer with Mode-Converting Bragg Gratings", JOURNAL OF LIGHTWAVE TECHNOLOGY, Bd. 18, Nr. 11, November 2000 (2000-11), XP011029810, ISSN: 0733-8724
- CHENG X P ET AL: "Single-Longitudinal-Mode Erbium-Doped Fiber Ring Laser Based on High Finesse Fiber Bragg Grating Fabry-Perot Etalon", IEEE PHOTONICS TECHNOLOGY LETTERS, Bd. 19, Nr. 12, 15. Juni 2008 (2008-06-15) , Seiten 976-978, XP011214861, ISSN: 1041-1135
- MELLONI A ET AL: "Equivalent circuit of Bragg gratings and its application to Fabry-Perot cavities", JOURNAL OF THE OPTICAL SOCIETY OF AMERICA A (OPTICS, IMAGE SCIENCE AND VISION), Bd. 20, Nr. 2, Februar 2003 (2003-02), Seiten 273-281, XP002627444, OPT. SOC. AMERICA USA ISSN: 0740-3232
- MOREY W W ET AL: "FIBER FABRY-PEROT INTERFEROMETER USING SIDE EXPOSED FIBER BRAGG GRATINGS", PROCEEDINGS OF THE OPTICAL FIBER COMMUNICATION CONFERENCE., Bd. CONF. 15, 2. Februar 1992 (1992-02-02) , - 7. Februar 1992 (1992-02-07), Seite 96, XP000341614, SAN JOSE ISBN: 978-1-55752-222-1
- STUTZKI F ET AL: "Passively stabilized 215-W monolithic CW LMA-fiber laser with innovative transversal mode filter", FIBER LASERS VII: TECHNOLOGY, SYSTEMS AND APPLICATIONS. PROCEEDINGS OF THE SPIE, Bd. 7580, 25. Januar 2010 (2010-01-25), Seiten 75801K-1-75801K-10, XP002627447, ISSN: 0277-786X

## Beschreibung

Die Erfindung betrifft einen Transversalmodenfilter in einem optischen Wellenleiter.

Transversalmodenfilter in optischen Wellenleitern spielen unter anderem bei der Verbesserung von Faserlasern eine wichtige Rolle.

Faserlaser haben sich in den letzten Jahren einen großen Anwendungsbereich durch ihre Kompaktheit, Temperaturstabilität und hohe Effizienz erschlossen. Sie kommen zum Beispiel in der Medizin oder der Materialbearbeitung zum Einsatz. Durch die Verwendung einer optischen Faser als aktives Medium wird ein monolithischer Aufbau des Faserlasers ermöglicht. Ein monolithischer Aufbau vermeidet die typischen Schwachpunkte anderer Laserarten, insbesondere eine aufwendige Justage der Ein- und Auskoppelspiegel, welche bei nicht-korrekter Ausführung erhebliche Leistungsverluste des Resonators zur Folge haben kann.

Durch den Bedarf an immer leistungsstärkeren Lasern allgemein, und damit auch an leistungsstarken Faserlasern, entstehen bei den eingesetzten Monomodefasern aufgrund der hohen Lichtbündelung auf sehr kleinem Faserquerschnitt nichtlineare Effekte, die die Leistungsstabilität des Faserlasers beeinträchtigen. Aus diesem Grund geht man mittlerweile dazu über, so genannte LMA-Fasern (Large Mode Area) einzusetzen. LMA-Fasern haben einen größeren Kerndurchmesser als gewöhnliche Monomode-Fasern, wobei durch eine geringe numerische Apertur dafür gesorgt wird, dass sie nur eine möglichst kleine Anzahl von transversalen Moden führen. Die größere Kernfläche in LMA-Fasern sorgt nunmehr für eine geringere Leistungsdichte innerhalb des Faserkerns, welche dadurch aber außer der Grundmode auch noch mehrere transversale Moden führt. Die transversalen Moden beeinträchtigen wiederum die Stabilität und Strahlqualität des Laserstrahls.

Daher besteht seit längerem das Bedürfnis nach der Möglichkeit einer Transversalmodenfilterung, welche die transversalen Moden innerhalb einer optischen Faser, zum Beispiel einer LMA-Faser, reduziert.

Im Stand der Technik sind Lösungen bekannt, welche "getaperte" Elemente oder Monomode-Faserabschnitte in der Laserkavität einsetzen. Diese Techniken haben jedoch den Nachteil, dass sie einen monolithischen Aufbau eines Faserlasers verhindern oder Leistungsverluste im Resonator hervorrufen. Ebenfalls ist es bekannt, durch gezielte Faserbiegung bei entsprechend geringem Biegeradius eine Transversalmodendämpfung zu erzielen. Dabei wird die Modenabhängigkeit der Biegeverluste der Faser ausgenutzt. Diese Methode reduziert bei starker Biegung allerdings die effektive Modenfläche und begrenzt damit die Vorteile des LMA-Faserkonzeptes.

Die US 5 048 913 beschreibt einen Transversalmodenfilter mit einem optischen Wellenleiter mit einem langgestreckten Multimoden-Kern. Mindestens ein Bragg-Gitter ist in den Kern eingebettet. Der Gitterabstand des Bragg-Gitters ist so abgestimmt, dass das an dem Gitter reflektierte Licht einer Mode konstruktiv interferiert, während das Licht irgendeiner anderen Moden das Gitter in der ursprünglichen Ausbreitungsrichtung ohne Dämpfung durchläuft.

Toru Mizunami et al. ("Bragg Gratings in Multimode and Few-Mode Optical Fibers", Journal of Lightwave Technology, Bd. 18, Nr. 2, Februar 2000, Seiten 230-235) beschreiben eine Untersuchung der Reflexionseigenschaften von Bragg-Gittern in Multimode-Fasern.

Dietmar Johlen et al. ("Fiber Fabry-Perot Interferometer with Mode-Converting Bragg Gratings", Journal of Lightwave Technology, Bd. 18, Nr. 11, November 2000, Seiten 1575-1582) beschreiben ein schmalbandiges Transmissionsfilter in Form einer in eine optische Faser integrierten Fabry-Perot-Kavität, die durch zwei modenkonvertierende Bragg-Gitter gebildet ist.

Cheng et al. ("Single-Longitudinal-Mode Erbium-Doped Fiber Ring Laser Based on High Finesse Fiber Bragg Grating Fabry-Perot Etalon", IEEE Photonics Technology Letters, Bd. 19, Nr. 12, 15. Juni 2008, Seiten 976-978) beschreiben einen Erbium-Faserlaser, in dessen Resonator ein durch Bragg-Gitter gebildetes Fabry-Perot-Etalon hoher Güte zum Zweck der Modenselektion zum Einsatz kommt.

Daher ist es Aufgabe der Erfindung, einen Transversalmodenfilter zu schaffen, der die Vorteile des LMA-Faserkonzeptes nicht beeinträchtigt und einen monolithischen Aufbau eines Faserlasers ermöglicht. Dabei soll gleichzeitig eine hohe Lasereffizienz erzielbar sein.

Zur Lösung dieser Aufgabe schlägt die Erfindung einen Transversalmodenfilter mit den Merkmalen des Anspruchs 1 vor.

Die spektralen Lagen, d.h. die Wellenlängen der einzelnen Resonanzen der Fabry-Perot-Kavität hängen von der Länge der Kavität und dem effektiven Brechungsindex der entsprechenden Transversalmode innerhalb der Kavität ab. Der Filter ist derart ausgebildet, dass innerhalb der Kavität modenabhängig unterschiedliche optische Weglängen erzeugt werden. Dies führt zu einer modenabhängigen Verschiebung der Resonanzen der Fabry-Perot-Kavität. Diejenigen Moden des optischen Wellenleiters, bei denen die Fabry-Perot-Kavität nicht resonant ist, werden reflektiert, andere transmittiert. Dadurch ergibt sich ein Filtermechanismus für bestimmte Moden des optischen Wellenleiters.

Im Sinne der Erfindung ist die Fabry-Perot-Kavität so konfiguriert, dass sich zumindest die Wellenlänge einer ersten Mode des optischen Wellenleiters von den resonanten Wellenlängen der Fabry-Perot-Kavität unterscheidet. Diese erste Mode kann die Fabry-Perot-Kavität nicht passieren, wird also an dieser stark reflektiert. Gemäß der Erfindung fällt die Wellenlänge wenigstens einer zweiten Mode mit einer der resonanten Wellenlängen der Fabry-Perot-Kavität im Wesentlichen zusammen. Das bedeutet, dass sich die Spektrallinien der entsprechenden Resonanz der Fabry-Perot-Kavität und der zweiten Mode zumindest teilweise überlappen müssen. Die zweite Mode passiert somit die Fabry-Perot-Kavität und wird entsprechend an dieser nur schwach reflektiert. Benutzt man die Anordnung in Reflexionsrichtung, wird entsprechend die erste Mode selektiert und die zweite Mode unterdrückt. Daraus resultiert die erfindungsgemäße Filterwirkung.

Gemäß einer bevorzugten Ausgestaltung der Erfindung ist vorgesehen, dass der Wellenleiter im Bereich der Fabry-Perot-Kavität und/oder im Bereich der reflektiven Elemente hinsichtlich des effektiven Brechungsindex wenigstens einer Mode des Wellenleiters gegenüber den übrigen Bereichen des Wellenleiters modifiziert ist. Hierdurch lassen sich auf praktisch einfache Art und Weise die oben beschriebenen modenabhängig unterschiedlichen optischen Weglängen und damit die modenabhängige Verschiebung der Resonanzen der Fabry-Perot-Kavität erzeugen.

Die Reflexionsspektren der reflektiven Elemente des erfindungsgemäßen Filters weisen mehrere Resonanzen (z.B. eine für jede Transversalmode) auf, z.B. indem, wie weiter unten beschrieben, die reflektiven Elemente als Bragg-Gitter in einem Multimode-Wellenleiter ausgebildet sind. Die unterschiedlichen effektiven Brechungsindizes der Transversalmoden führen dabei zu unterschiedlichen Bragg-Wellenlängen für die verschiedenen Moden. Die Transversalmoden zeigen demnach unterschiedliche Wellenlängen und sind spektral voneinander getrennt.

Bei einer bevorzugten Ausgestaltung der Erfindung ist der optische Wellenleiter eine lichtleitende Faser mit Faserkern und Fasermantel. Dabei kann der Faserkern innerhalb der Fabry-Perot-Kavität eine transversal zur Faserachse verlaufende Brechungsindexvariation aufweisen. Durch die Brechungsindexvariation wird die oben beschriebene erfindungsgemäße Filterwirkung realisiert, indem nämlich innerhalb der Faser modenabhängig unterschiedliche optische Weglängen erzeugt werden. Es lässt sich z. B. die optische Weglänge in der Nähe der Faserachse erhöhen, während in den mantelnahen Bereichen eine geringere optische Weglänge auftritt. Die Brechungsindexvariation über den Querschnitt der Faser wirkt sich entsprechend der geometrisch unterschiedlichen Feldverteilung der Moden unterschiedlich auf deren jeweilige optische Weglänge aus. Somit kann gezielt dafür gesorgt werden, dass einzelne Moden nicht die Resonanzbedingung der Fabry-Perot-Kavität erfüllen und entsprechend selektiert werden. Dies ist vor dem Hintergrund wichtig, dass bei allen Moden der Faser (ohne Brechungsindexvariation), bei denen die reflektiven Elemente der Fabry-Perot-Kavität resonant sind, die Wellenlängen sämtlicher dieser Moden automatisch auch mit den resonanten Wellenlängen der Fabry-Perot-Kavität übereinstimmen. Diese Übereinstimmung wird durch die beschriebene Brechungsindexvariation gezielt für einzelne Moden aufgehoben.

Erfindungsgemäß kann ebenso der Fasermantel innerhalb der Fabry-Perot-Kavität eine transversal zur Faserachse verlaufende Brechungsindexvariation aufweisen, um die beschriebene Wirkung zu erzielen. Die Brechungsindexvariation des Fasermantels kann einzeln oder zusätzlich zur Brechungsindexvariation des Faserkerns vorgesehen sein.

Weiterhin besteht die Möglichkeit, dass der Faserkern und/oder der Fasermantel im Bereich zumindest eines der reflektiven Elemente eine transversal zur Faserachse verlaufende Brechungsindexvariation oder eine sonstige transversale Inhomogenität aufweisen. Auch hierdurch lässt sich die gewünschte Filterwirkung realisieren.

Die zuvor beschriebene transversale Brechungsindexvariation kann einen Stufenverlauf oder einen Gradientenverlauf aufweisen. Möglich sind z.B. transversal zur Längsachse des Wellenleiters kreisförmige, ringförmige, kreuzförmige oder quadratische Geometrien der Brechungsindexvariation. Ebenso ist es möglich, dass die Brechungsindexvariation in Richtung zweier orthogonaler Transversalachsen des Wellenleiters unterschiedlich ist. In diesem Fall ergibt sich eine polarisationsabhängige Filterwirkung.

Die erfindungsgemäße Fabry-Perot-Kavität lässt sich vollständig durch gängige Laserverfahren in einen optischen Wellenleiter einschreiben. Hierzu werden beispielsweise gepulste fs-Laser verwendet, welche gezielt die lokalen Eigenschaften, wie z. B. den Brechungsindex des Faserkerns, verändern.

Eine besonders praktikable Ausgestaltung der Erfindung sieht vor, dass, wie oben erwähnt, die reflektiven Elemente Wellenleiter-Bragg-Gitter sind. Derartige reflektive Elemente haben ein schmalbandiges Spektrum und lassen sich leicht und kostengünstig, z.B. als Faser-Bragg-Gitter, herstellen.

Gemäß der Erfindung können die reflektiven Elemente sowohl gleiche Reflexionsspektren als auch unterschiedliche Reflexionsspektren aufweisen. Für die Funktion der Fabry-Perot-Kavität ist entscheidend, dass die Reflexionsspektren im Bereich der zu filternden Moden des Wellenleiters überlappen.

Besonders eignet sich der erfindungsgemäße Transversalmodenfilter für die Verwendung in einem Laser, insbesondere in einem Hochleistungs-Faserlaser. Dabei besteht die Möglichkeit der Realisierung eines im Wesentlichen monolithischen Aufbaus, der sich aufgrund der Transversalmodenfilterung durch eine hohe Stabilität und Strahlqualität auszeichnet. Der Transversalmodenfilter kommt zweckmäßigerweise unmittelbar in der aktiven Faser des Lasers zum Einsatz.

Ausführungsbeispiele der Erfindung werden im Folgenden anhand der Zeichnungen näher erläutert. Es zeigen:
- Figur 1: Querschnitte des Faserkerns mit unterschiedlichen Transversalmoden,
- Figur 2: eine optische Faser mit integriertem Transversalmodenfilter,
- Figur 3a: Reflexionsspektren der reflektiven Elemente und der Fabry-Perot-Kavität ohne Brechungsindexvariation,
- Figur 3b: Gesamtreflexionsspektrum ohne Brechungsindexvariation,
- Figur 4: Querschnitte des Faserkerns mit Brechungsindexvariation und Feldkonturlinien unterschiedlicher Transversalmoden,
- Figur 5a: Reflexionsspektren der reflektiven Elemente und der Fabry-Perot-Kavität gemäß der Erfindung,
- Figur 5b: Gesamtreflexionsspektrum des Transversalmodenfilters,
- Figuren 6 und 7: Querschnitte des Faserkerns mit unterschiedlichen Brechungsindexvariationen,
- Figur 8: eine optische Faser mit integriertem Transversalmodenfilter in einer weiteren Variante.

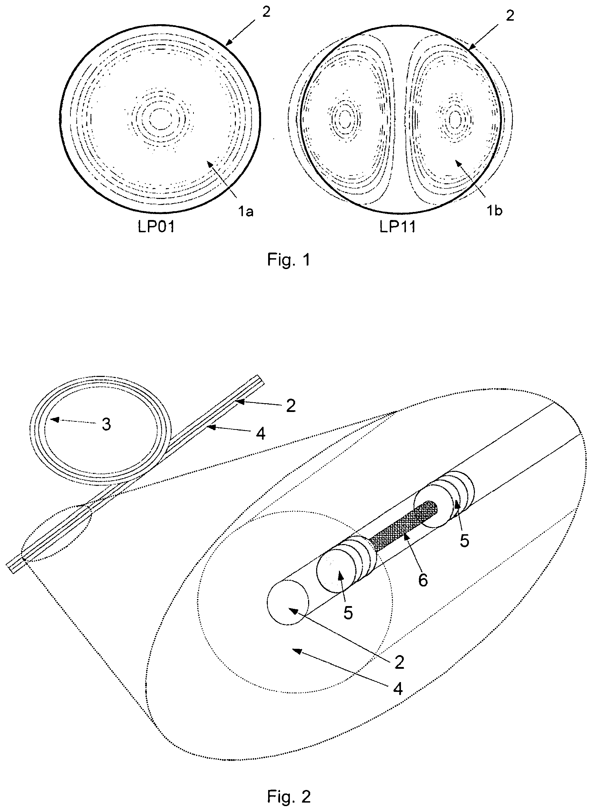

In Figur 1 sind zwei Querschnitte eines Faserkerns 2 einer lichtleitenden Faser dargestellt. Die Faser führt zwei Moden LP01 und LP11, deren jeweils unterschiedlicher Feldverlauf 1a bzw. 1b anhand der in der Figur 1 dargestellten Konturlinien erkennbar ist. Entlang jeder Konturlinie ist die Amplitude des elektrischen Feldes der jeweiligen Mode konstant. Jeder dieser Moden ist ein effektiver Brechungsindex zugeordnet. Die Mode mit dem höchsten effektiven Brechungsindex (LP01) ist normalerweise die Grundmode, während die restlichen Moden (LP11) als Moden höherer Ordnung bezeichnet werden. Die Moden höherer Ordnung sind normalerweise nicht erwünscht, weil sie die nutzbare Leistung des jeweiligen optischen Systems reduzieren. Daher besteht Bedarf nach Bauelementen, welche in der Lage sind, die Intensität der Moden höherer Ordnung im Verhältnis zur Intensität der Grundmode zu reduzieren. Solche Bauelemente sind Transversalmodenfilter im Sinne der Erfindung.

In Figur 2 ist beispielhaft eine optische Stufenindexfaser 3 dargestellt. Diese besteht aus einem Faserkern 2 und einem den Kern umgebenden Fasermantel 4. Ein Abschnitt der Faser ist vergrößert dargestellt. Innerhalb des Faserkerns 2 ist eine Fabry-Perot-Kavität eingebracht, welche zwei reflektive Elemente 5 sowie eine Brechungsindexvariation 6 aufweist. Die reflektiven Elemente 5 sind als Faser-Bragg-Gitter ausgebildet. Diese Strukturen sind periodische Modifikationen des Brechungsindex des Faserkerns in Faserlängsrichtung, welche wie ein monochromatischer Spiegel wirken. Die transversale Brechungsindexmodifikation 6 innerhalb der Fabry-Perot-Kavität ist als Stufenindexvariation ausgebildet. Hier unterscheidet sich der Brechungsindex innerhalb des Volumens 6 unter Ausbildung eines scharfen Indexsprungs in Transversalrichtung von dem Brechungsindex innerhalb des übrigen Faserkerns 2. Die transversale Brechungsindexvariation ist, wie in Figur 2 zu erkennen, auf den Bereich der Fabry-Perot-Kavität beschränkt. Außerhalb der reflektiven Elemente und der Fabry-Perot-Kavität ist der Faserkern 2 hinsichtlich des Brechungsindex unverändert.

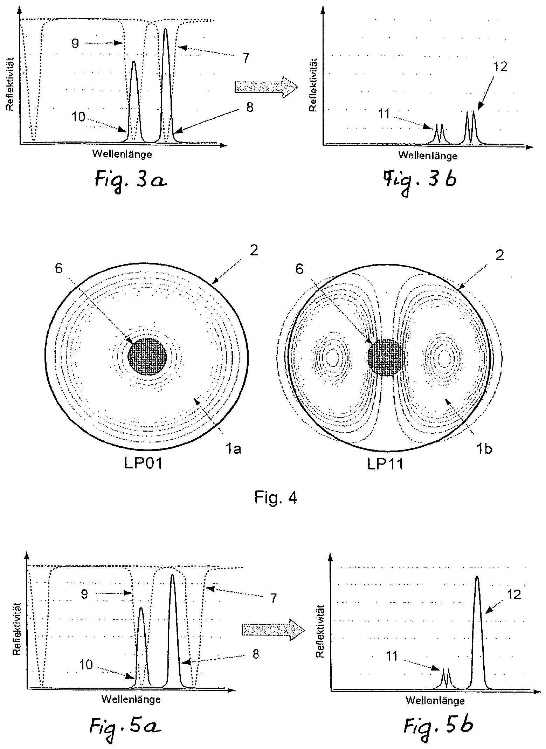

Figur 3 illustriert die Reflektivität der Fabry-Perot-Kavität mit Faser-Bragg-Gittern ohne transversale Brechungsindexvariation. Wenn die Länge der Fabry-Perot-Kavität so gewählt ist, dass eine ihrer Resonanzen mit der Wellenlänge einer Mode der Faser und gleichzeitig mit der Bragg-Wellenlänge der reflektiven Elemente 5 übereinstimmt oder im Wesentlichen zusammenfällt, dann fallen die Wellenlängen aller Moden, die von den Faser-Bragg-Gittern reflektiert werden, mit den Resonanzen der Fabry-Perot-Kavität zusammen. In Figur 3a ist diese Situation dargestellt. Das Reflexionsspektrum der Fabry-Perot-Kavität ist als gestrichelte Kurve für zwei transversale Moden dargestellt: Die Grundmode 7 und eine Mode höherer Ordnung 9. Wie man sieht, besitzt das Reflexionsspektrum der Fabry-Perot-Kavität eine hohe Reflektivität für diejenigen Wellenlängen, bei denen die Fabry-Perot-Kavität nicht resonant ist, d.h. außerhalb der Resonanzlinien 7 und 9. Bei den resonanten Wellenlängen ist die Fabry-Perot-Kavität annähernd transparent, und das Licht kann diese passieren. In Figur 3a ist weiterhin das Reflexionsspektrum der reflektiven Elemente 5 als durchgezogene Kurve dargestellt. Das Gesamtreflexionsspektrum der Struktur ist eine Kombination der Reflexionsspektren der Kavität und der reflektiven Elemente. Wie in Figur 3a zu erkennen ist, fallen die Resonanzen 8, 10 der reflektiven Elemente 5 und die Resonanzen 7, 9 der Fabry-Perot-Kavität für die beiden Moden zusammen. Das Ergebnis ist, wie das Gesamtreflexionsspektrum in Figur 3b zeigt, dass das Licht insgesamt die Fabry-Perot-Kavität im Wesentlichen passiert. Die Gesamtreflektivität ist für beide Moden 11, 12 gleichermaßen stark reduziert. Eine Transversalmodenfilterung findet nicht statt.

Figur 4 zeigt den Querschnitt eines Faserkerns 2 mit der erfindungsgemäßen Brechungsindexvariation 6 innerhalb der Fabry-Perot-Kavität. Diese Struktur bewirkt eine modenabhängige Variation der optische Weglänge innerhalb des Faserkerns 2. In Figur 4 ist eine Stufenindexvariation mit kreisförmiger Geometrie im Kern 2 einer LMA-Faser gezeigt. Die Feldverläufe 1a, 1b der unterschiedlichen transversalen Moden LP01 und LP11, in denen das Licht in der Faser propagiert, haben, wie die Figur 4 zeigt, verschiedene Überlappungsbereiche mit der indexmodifizierten Region 6. Der Feldverlauf 1a der Grundmode LP01 hat eine größere Überlappung mit der indexmodifizierten Region 6 als der Feldverlauf 1b der Mode LP11 höherer Ordnung. Dies führt zu einer stärkeren Änderung der optischen Weglänge für die Grundmode LP01 als für die Mode LP11 höherer Ordnung.

In Figur 5 sind die Reflexionsspektren der reflektiven Elemente 5 und der Fabry-Perot-Kavität mit Faser-Bragg-Gittern für den Fall mit erfindungsgemäßer Brechungsindexvariation 6 dargestellt. Die Indexvariation 6 innerhalb der Kavität verschiebt die optische Weglänge der verschiedenen Moden in unterschiedlichem Ausmaß. Daher erhalten die Reflexionsspektren der reflektiven Elemente und der Fabry-Perot-Kavität eine Verschiebung zueinander. Es ergibt sich, wie in Figur 5a dargestellt, ein Versatz der Wellenlängen der Resonanz 8 der reflektiven Elemente 5 zu der entsprechenden Resonanz 7 der Fabry-Perot-Kavität für die Grundmode. Gleichzeitig bleibt der Transmissionspeak 9 in dem Reflexionsspektrum der Fabry-Perot-Kavität für die Mode höherer Ordnung bei der Wellenlänge des Reflexionspeaks 10 der reflektiven Elemente 5. Hieraus ergibt sich, wie in Figur 5b dargestellt, das Gesamtreflexionsspektrum mit einem stark reduzierten Reflexionspeak 11 für die Mode höherer Ordnung und einem ausgeprägten Reflexionspeak 12 für die Grundmode. Insofern ist die Erfindung geeignet, die Grundmode von der Mode höherer Ordnung zu trennen. Mit der Brechungsindexmodifikation innerhalb der Fabry-Perot-Kavität findet also die gewünschte Transversalmodenfilterung statt.

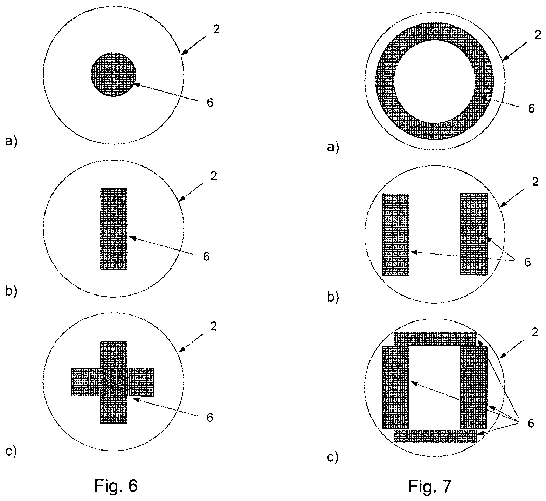

Die Figuren 6 und 7 zeigen unterschiedliche mögliche Geometrien der transversalen Brechungsindexmodifikation 6 innerhalb des Faserkerns 2. Die Erfindung ermöglicht es, die Wirkungsweise der Struktur entsprechend der Feldverteilung der vorkommenden Moden anzupassen und zu optimieren. In Figur 6 sind einige mögliche Geometrien gezeigt, welche auf der Wellenleiterachse zentriert sind. Jede dieser Geometrien hat eine andere Auswirkung auf die Transversalmodenfilterung. Die Geometrie in Figur 6b bewirkt gegenüber den Geometrien der Figuren 6a und 6c eine Polarisationsabhängigkeit der Filterung. Die indexmodifizierte Region 6 kann gemäß der Erfindung auch am Rand des Faserkerns 2 angeordnet sein. In den Figuren 7a und 7c sind Indexmodifizierungen im äußeren Bereich des Faserkerns gezeigt, welche keine Polarisationsabhängigkeit der Filterung bewirken, während bei der Geometrie nach Figur 7b die Filterung polarisationsabhängig ist. Die Indexmodifikation kann auch im Fasermantel erfolgen (nicht dargestellt).

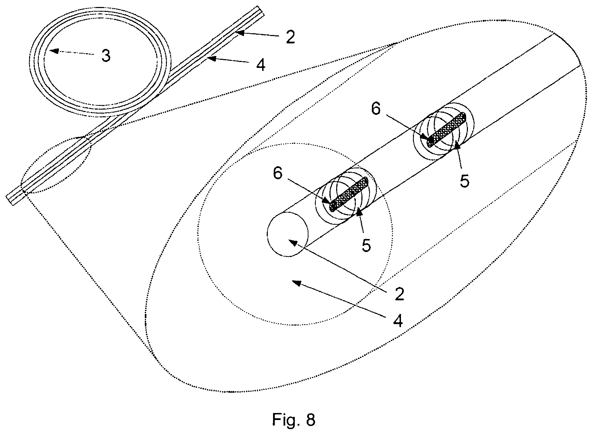

In Figur 8 ist ein erfindungsgemäßer Transversalmodenfilter dargestellt, bei dem der Faserkern 2 im Bereich der reflektiven Elemente 5 eine transversale Brechungsindexvariation 6 aufweist. Die übrigen Bereiche des Faserkerns 2, insbesondere auch innerhalb der Fabry-Perot-Kavität zwischen den reflektiven Elementen 5, bleiben unverändert. Auch bei dieser Variante sind alle möglichen Geometrien der Indexvariation denkbar.

## Patentansprüche

1. Transversalmodenfilter in einem optischen Wellenleiter (3), wobei das Filter eine in den optischen Wellenleiter (3) integrierte Fabry-Perot-Kavität mit zwei voneinander beabstandeten reflektiven Elementen (5) umfasst, wobei das Reflexionsspektrum der reflektiven Elemente (5) eine erste resonante Wellenlänge (8) aufweist, bei der die Reflexion für eine erste Mode des optischen Wellenleiters (3) maximal wird, und eine zweite resonante Wellenlänge (10) aufweist, bei der die Reflexion für eine zweite Mode des optischen Wellenleiters (3) maximal wird, wobei sich die erste Wellenlänge (8) von den resonanten Wellenlängen (7, 9) der Fabry-Perot-Kavität für die erste Mode unterscheidet, während die zweite Wellenlänge (10) mit einer resonanten Wellenlänge (9) der Fabry-Perot-Kavität für die zweite Mode im Wesentlichen zusammenfällt.

2. Transversalmodenfilter nach Anspruch 1, wobei der Wellenleiter (3) im Bereich der Fabry-Perot-Kavität und/oder im Bereich der reflektiven Elemente (5) hinsichtlich des effektiven Brechungsindex wenigstens einer Mode des Wellenleiters gegenüber den übrigen Bereichen des Wellenleiters modifiziert ist.

3. Transversalmodenfilter nach Anspruch 1 oder 2, wobei der Wellenleiter (3) innerhalb der Fabry-Perot-Kavität eine transversal zur Wellenleiterachse verlaufende Brechungsindexvariation aufweist.

4. Transversalmodenfilter nach einem der Ansprüche 1 bis 3, wobei der Wellenleiter (3) im Bereich zumindest eines der reflektiven Elemente (5) eine transversal zur Wellenleiterachse verlaufende Brechungsindexvariation (6) oder eine transversale Inhomogenität aufweist.

5. Transversalmodenfilter nach einem der Ansprüche 1 bis 4, wobei die reflektiven Elemente (5) Wellenleiter-Bragg-Gitter sind.

6. Transversalmodenfilter nach einem der Ansprüche 1 bis 5, wobei die reflektiven Elemente (5) gleiche Reflexionsspektren aufweisen.

7. Transversalmodenfilter nach einem der Ansprüche 3 bis 6, wobei die transversale Brechungsindexvariation (6) einen Stufenverlauf oder einen Gradientenverlauf aufweist.

8. Transversalmodenfilter nach einem der Ansprüche 3 bis 7, wobei die Geometrie der transversalen Brechungsindexvariation (6) kreisförmig, elliptisch, ringförmig, kreuzförmig, rechteckig oder quadratisch ist.

9. Transversalmodenfilter nach einem der Ansprüche 3 bis 8, wobei die transversale Brechungsindexvariation (6) in Richtung zweier zueinander orthogonaler Transversalachsen des Wellenleiters unterschiedlich ist.

10. Transversalmodenfilter nach einem der Ansprüche 1 bis 9, wobei der optische Wellenleiter (3) eine lichtleitende Faser ist.

11. Laser, insbesondere Faserlaser, mit einem Transversalmodenfilter nach einem der Ansprüche 1 bis 10.

12. Verwendung einer in einen optischen Wellenleiter (3) integrierten Fabry-Perot-Kavität, die zwei voneinander beabstandete reflektive Elemente (5) aufweist, als Transversalmodenfilter, wobei das Reflexionsspektrum der reflektiven Elemente (5) eine erste resonante Wellenlänge (8) aufweist, bei der die Reflexion für eine erste Mode des optischen Wellenleiters (3) maximal wird, und eine zweite resonante Wellenlänge (10) aufweist, bei der die Reflexion für eine zweite Mode des optischen Wellenleiters (3) maximal wird, wobei der optische Wellenleiter (3) im Bereich der Fabry-Perot-Kavität und/oder im Bereich der reflektiven Elemente (5) hinsichtlich des effektiven Brechungsindex wenigstens einer Mode des Wellenleiters gegenüber den übrigen Bereichen des Wellenleiters (3) modifiziert ist.

## Claims

1. Transverse mode filter in an optical waveguide (3), wherein the filter comprises a Fabry-Perot cavity, which is integrated in the optical waveguide (3), having two spaced-apart reflective elements (5), wherein the reflection spectrum of the reflective elements (5) has a first resonant wavelength (8) at which the reflection becomes maximum for a first mode of the optical waveguide (3), and has a second resonant wavelength (10) at which the reflection becomes maximum for a second mode of the optical waveguide (3), wherein the first wavelength (8) differs from the resonant wavelengths (7, 9) of the Fabry-Perot cavity for the first mode, while the second wavelength (10) substantially coincides with a resonant wavelength (9) of the Fabry-Perot cavity for the second mode.

2. Transverse mode filter according to Claim 1, wherein the waveguide (3) in the region of the Fabry-Perot cavity and/or in the region of the reflective elements (5) is modified as regards the effective refractive index of at least one mode of the waveguide with respect to the remaining regions of the waveguide.

3. Transverse mode filter according to Claim 1 or 2, wherein the waveguide (3) within the Fabry-Perot cavity has a refractive index variation that extends transversely to the waveguide axis.

4. Transverse mode filter according to one of Claims 1 to 3, wherein the waveguide (3) has, in the region of at least one of the reflective elements (5), a refractive index variation (6), which extends transversely to the waveguide axis, or a transverse inhomogeneity.

5. Transverse mode filter according to one of Claims 1 to 4, wherein the reflective elements (5) are waveguide Bragg gratings.

6. Transverse mode filter according to one of Claims 1 to 5, wherein the reflective elements (5) have identical reflection spectra.

7. Transverse mode filter according to one of Claims 3 to 6, wherein the transverse refractive index variation (6) has a step profile or a gradient profile.

8. Transverse mode filter according to one of Claims 3 to 7, wherein the geometry of the transverse refractive index variation (6) is circular, elliptical, annular, cross-shaped, rectangular or square.

9. Transverse mode filter according to one of Claims 3 to 8, wherein the transverse refractive index variation (6) differs in the direction of two mutually orthogonal transverse axes of the waveguide.

10. Transverse mode filter according to one of Claims 1 to 9, wherein the optical waveguide (3) is a light-guiding fibre.

11. Laser, in particular fibre laser, having a transverse mode filter according to one of Claims 1 to 10.

12. Use of a Fabry-Perot cavity integrated in an optical waveguide (3), which cavity has two spaced-apart reflective elements (5), as a transverse mode filter, wherein the reflection spectrum of the reflective elements (5) has a first resonant wavelength (8) at which the reflection becomes maximum for a first mode of the optical waveguide (3), and has a second resonant wavelength (10) at which the reflection becomes maximum for a second mode of the optical waveguide (3), wherein the optical waveguide (3) in the region of the Fabry-Perot cavity and/or in the region of the reflective elements (5) is modified as regards the effective refractive index of at least one mode of the waveguide with respect to the remaining regions of the waveguide (3) .

## Revendications

1. Filtre à mode transversal prévu dans un guide d'ondes optiques (3),
le filtre comportant une cavité de Fabry-Perot intégrée dans le guide d'ondes optiques (3) et présentant deux éléments réfléchissants (5) disposés à distance mutuelle,
le spectre de réflexion des éléments réfléchissants (5) présentant une première longueur d'onde de résonance (8) à laquelle la réflexion est maximale pour un premier mode du guide d'ondes optiques (3) et une deuxième longueur d'onde de résonance (10) à laquelle la réflexion est maximale pour un deuxième mode du guide d'ondes optiques (3), la première longueur d'onde de résonance (8) se distinguant des longueurs d'onde de résonance (7, 9) de la cavité de Fabry-Perot pour le premier mode alors que la deuxième longueur d'onde de résonance (10) coïncide essentiellement avec une longueur d'onde de résonance (9) de la cavité de Fabry-Perot pour le deuxième mode.

2. Filtre à mode transversal selon la revendication 1, dans lequel le guide d'ondes (3) est modifié au niveau de la cavité de Fabry-Perot et/ou au niveau des éléments réfléchissants (5) en termes d'indice de réfraction efficace d'au moins un mode du guide d'ondes par rapport aux autres parties du guide d'ondes.

3. Filtre à mode transversal selon les revendications 1 ou 2, dans lequel le guide d'ondes optiques (3) présente à l'intérieur de la cavité de Fabry-Perot une variation d'indice de réfraction qui s'étend transversalement par rapport à l'axe du guide d'onde.

4. Filtre à mode transversal selon l'une des revendications 1 à 3, dans lequel le guide d'ondes (3) présente au niveau d'au moins l'un des éléments réfléchissants (5) une variation (6) d'indice de réfraction qui s'étend transversalement par rapport à l'axe du guide d'ondes, ou une inhomogénéité transversale.

5. Filtre à mode transversal selon l'une des revendications 1 à 4, dans lequel les éléments réfléchissants (5) sont des grilles de Bragg de guide d'ondes.

6. Filtre à mode transversal selon l'une des revendications 1 à 5, dans lequel les éléments réfléchissants (5) présentent le même spectre de réflexion.

7. Filtre à mode transversal selon l'une des revendications 3 à 6, dans lequel la variation (6) de l'indice de réfraction présente une évolution en gradins ou une évolution en gradient.

8. Filtre à mode transversal selon l'une des revendications 3 à 7, dans lequel la géométrie de la variation (6) de l'indice de réfraction est circulaire, elliptique, annulaire, en croix, en rectangle ou en carré.

9. Filtre à mode transversal selon l'une des revendications 3 à 8, dans lequel la variation (6) de l'indice de réfraction est différente dans la direction de deux axes transversaux mutuellement perpendiculaires du guide d'onde.

10. Filtre à mode transversal selon l'une des revendications 1 à 9, dans lequel le guide d'ondes optiques (3) est une fibre conduisant la lumière.

11. Laser, en particulier laser à fibres, doté d'un filtre à mode transversal selon l'une des revendications 1 à 10.

12. Utilisation comme filtre à mode transversal d'une cavité de Fabry-Perot intégrée dans un guide d'ondes optiques (3) et présentant deux éléments réfléchissants (5) disposés à distance mutuelle,
le spectre de réflexion des éléments réfléchissants (5) présentant une première longueur d'onde de résonance (8) à laquelle la réflexion est maximale pour un premier mode du guide d'ondes optiques (3) et une deuxième longueur d'onde de résonance (10) à laquelle la réflexion est maximale pour un deuxième mode du guide d'ondes optiques (3), la première longueur d'onde de résonance (8) se distinguant des longueurs d'onde de résonance (7, 9) de la cavité de Fabry-Perot pour le premier mode alors que la deuxième longueur d'onde de résonance (10) coïncide essentiellement avec une longueur d'onde de résonance (9) de la cavité de Fabry-Perot pour le deuxième mode.
